(19) Europäisches Patentamt / European Patent Office / Office européen des brevets

(11) **EP 3 667 851 B1**

(12) **EUROPÄISCHE PATENTSCHRIFT**

(45) Veröffentlichungstag und Bekanntmachung des Hinweises auf die Patenterteilung:
**24.01.2024   Patentblatt 2024/04**

(21) Anmeldenummer: **18212287.9**

(22) Anmeldetag: **13.12.2018**

(51) Internationale Patentklassifikation (IPC):
**H02J 3/00** (2006.01)

(52) Gemeinsame Patentklassifikation (CPC):
**H02J 3/00;** H02J 2203/20; Y02E 60/00; Y04S 40/20

(54) **ERSTELLUNG DYNAMISCHER MODELLE VON NETZKNOTEN IN EINEM NIEDER- UND/ODER MITTELSPANNUNGS-VERTEILNETZ DURCH SELBSTLERNENDEN ALGORITHMUS**

CREATION OF DYNAMIC MODELS OF NETWORK NODES IN A LOW AND / OR MEDIUM VOLTAGE DISTRIBUTION NETWORK BY USE OF A SELF LEARNING ALGORITHM

CRÉATION DE MODÈLES DYNAMIQUES DE NOEUDS DE RÉSEAU DANS UN RÉSEAU DE DISTRIBUTION À FAIBLE ET / OU MOYENNE TENSION À L'AIDE D'UN ALGORITHME D' APPRENTISSAGE AUTOMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**17.06.2020   Patentblatt 2020/25**

(73) Patentinhaber: **Siemens Aktiengesellschaft**
**80333 München (DE)**

(72) Erfinder:
• **Einfalt, Alfred**
  **1210 Wien (AT)**
• **Diwold, Konrad**
  **1180 Wien (AT)**
• **Frischenschlager, Albin**
  **1230 Wien (AT)**
• **Mosshammer, Ralf**
  **1020 Wien (AT)**

(74) Vertreter: **Siemens Patent Attorneys**
**Postfach 22 16 34**
**80506 München (DE)**

(56) Entgegenhaltungen:
**EP-A1- 2 942 855     US-A1- 2018 018 743**

EP 3 667 851 B1

**Beschreibung**

Technisches Gebiet

Die Erfindung betrifft ein computerimplementiertes Verfahren zur Erstellung von dynamischen Modellen von Netzknoten in einem Nieder- und/oder Mittelspannungs-Verteilnetz, geeignet zur Verwendung in einem Netzbetriebsführungssystem für die elektrische Stromverteilung (insbesondere als Eingangsmodelle eines Netzbetriebsführungssystem in einer Netzleitzentrale), wobei mit zumindest einer dezentralen Einheit zur Messwertaufnahme und -speicherung Zeitreihen von strombezogenen Messwerten, welche zumindest einen bestimmten Netzknoten betreffen, erfasst und abgespeichert werden.

Niederspannungsnetze sind ein Teil des Stromnetzes zur Verteilung der elektrischen Energie an den größten Teil der elektrischen Endverbraucher, der aus Niederspannungsgeräten besteht. Um Spannungsverluste zu vermeiden, sind Niederspannungsnetze in der räumlichen Ausdehnung auf einen Bereich von einigen 100 m bis zu einigen wenigen Kilometern beschränkt. Sie werden daher regional über Transformatorenstationen aus einem übergeordneten Mittelspannungsnetz gespeist. Sie werden in Europa üblicher Weise mit einer Netzspannung von 230 V (zwischen jedem Außenleiter und dem Neutralleiter) bzw. 400 V (zwischen den drei Außenleitern), jedenfalls aber nur bis zu 1000 V betrieben. Bemessungsleistungen einzelner Ortsnetztransformatoren können je nach Zielnetzplanung des jeweiligen Verteilnetzbetreibers variieren, liegen aber typischer Weise bei 250 oder 400kVA für ländliche Gebiete und 630 oder 800kVA für innerstädtische Gebiete.

Der Begriff Niederspannungsnetz im Sinne dieser Erfindung bezeichnet einen Teil des Verteilnetzes, also einen Abschnitt, der von einem bestimmten Ortsnetztransformator mit elektrischer Energie versorgt wird.

Komponenten des Niederspannungsnetzes können sein: Stromerzeuger (z.B. Photovoltaikanlagen, Kleinwindkraftanlagen), Speicher (z.B. Batterien, Wärmepumpen, Ladestationen für Elektrofahrzeuge), flexible Verbraucher (z.B. elektrische Speicherheizungen, Gebäude mit und ohne Gebäudeautomationssystem) und Netzbetriebsmittel (Transformatoren, Leitungen, Sicherungen, Messgeräte wie Smart Meter,...). Dabei können insbesondere Stromerzeuger, Speicher und flexible Verbraucher als steuerbare Komponenten ausgeführt sein.

Mittelspannungsnetze sind ein Teil des Stromnetzes zur Verteilung der elektrischen Energie auf Strecken im Bereich einiger Kilometer, in ländlichen Bereichen bis zu 100 km. Sie werden üblicherweise mit Hochspannung zwischen 1 kV und 52kV, insbesondere mit 10 kV, 20 kV oder 30 kV betrieben. Ein Mittelspannungsnetz dient typischerweise der elektrischen Energieversorgung einer Region, die mehrere Ortschaften, oder in Städten einen Stadtteil, umfasst. Mittelspannungsnetze der regionalen Verteilnetzbetreiber werden im Regelfall in Umspannwerken aus dem übergeordneten Hochspannungsnetz, wie der 110-kV-Ebene (Verteilnetzebene), gespeist und dienen der Anspeisung der regional verteilten Transformatorenstationen, welche die einzelnen Niederspannungsnetze zu den Endkunden versorgen. Größere Stromkunden, wie beispielsweise Industriebetriebe und Krankenhäuser aber auch größere Schwimmbäder und größere Rundfunktürme, haben meist eigene Mittelspannungsanschlüsse mit betriebseigener Umspannanlage.

Die für die Versorgung nötigen Leistungstransformatoren zur Anspeisung bewegen sich im Bereich von 20 MVA bis 60 MVA. In der Regel sind diese Leistungstransformatoren auch die letzte Ebene, auf der mittels Stufenschalter lastabhängige Spannungsschwankungen ausgeglichen werden können. Bei Bedarf können bei großer Einspeiseleistung von dezentral gewonnen regenerativen Energieträgern elektronische Mittelspannungsregler eingesetzt werden. Mittelspannungsnetze können von mehreren Punkten gespeist werden, auch kleinere Kraftwerke wie Windkraftanlagen, Biogasanlagen und große Photovoltaikanlagen speisen in regionale Mittelspannungsnetze ein. Im Mittelspannungsnetz können insbesondere Leistungstransformatoren, Mittelspannungsregler, Stromerzeuger, Speicher und flexible Verbraucher als steuerbare Komponenten ausgeführt sein.

Stand der Technik

Der klassische Netzbetrieb bei der Elektrizitätsversorgung ist durch die zunehmende Durchdringung mit dezentralen, meist erneuerbaren, Energieerzeugungsanlagen (DEA, üblicher Weise im Leistungsbereich von 3 bis 100 kW) vor große Herausforderungen gestellt. Hinzu kommen die Entwicklung der Elektromobilität und damit eine Verstärkung der Substitution von anderen Energieübertragungsformen durch Elektrizität.

Das sogenannte Smart Grid wird als Lösung für diese Problemstellungen gesehen. Das Smart Grid oder intelligente Stromnetz umfasst die kommunikative Vernetzung und Steuerung von Stromerzeugern, Speichern, elektrischen Verbrauchern und Netzbetriebsmitteln in Energieübertragungs- und Energieverteilungsnetzen der Elektrizitätsversorgung.

Um diese Änderung im Verteilnetz handhabbar zu machen, muss das Verteilnetz ähnlich lückenlos beobachtbar sein bzw. automatisiert gesteuert werden können wie ein Übertragungsnetz. Dazu werden in Netzleitzentralen des Verteilnetzes spezielle Anwendungen im sogenannten Distribution Management System (DMS) eingesetzt, wie z.B. eine Distribution System State Estimation (DSSE) oder eine Volt/Var Control (VVC).

Die Bezeichnung Distribution Management System (DMS) wird in Smart Grids für eine zentrale Software Komponente der Netzleitstelle benutzt, welches die elektrische Stromverteilung im Verteilnetz überwacht, verwaltet und kontrolliert. DMS verwalten die energieerzeugenden Anlagen, die Energiespeicher, die Energieverteilung und das Lastmanagement mit der Steuerung verbrauchsorientierter Kundengeräte mittels Demand Response. Ein solches DMS arbeitet mit Echtzeitinformationen und sorgt für die kurzfristige Wiederherstellung der Stromversorgung, für verkürzte Ausfallzeiten durch ein sogenanntes Outage Management System (OMS), eine verbesserte Versorgungszuverlässigkeit und akzeptable Frequenz- und Spannungswerte. Das DMS kann Schnittstellen zu anderen Systemen und Anwendungen haben, wie geografischen Informationssystemen (GIS), Outage Management Systems (OMS) oder Customer Information Systems (CIS).

Die Anwendung Distribution System State Estimation (DSSE) soll verlässliche Schätzwerte für die im Verteilnetz vorliegenden Spannungen liefern. Eine interessierende Variable, die durch die DSSE Anwendung berechnet werden soll, ist der Abstand der Spannung zu vorgegebenen Grenzwerten. Die Berechnung muss meist auf teilweise ungenaue oder fehlende Messwerte gestützt werden.

Die Anwendung Volt/Var Control (VVC) betrifft die Regelung der Spannung und Blindleistung im Verteilnetz. Dazu können Einrichtungen verwendet werden, die Blindleistung in das Verteilnetz einbringen und auf diese Weise blindleistungsbedingte Spannungsabfälle ausgleichen. VVC braucht dazu entsprechende Aktuatoren, wie z.B. Regelumformer in einem Umspannwerk, FACTS (Flexible Alternating Current Transmission Systems) und mittelgroße Kraftwerke sowie in noch sehr geringem Ausmaß regelbare Ortsnetztransformatoren. Beide Anwendungen arbeiten mit Lastmodellen, und zunehmend auch mit Erzeugungsmodellen, für einzelne Netzknoten, an denen größere Lasten, wie Industriebetriebe, größere Erzeuger, wie (Klein)Wasserkraftwerke und auch eine große Zahl von Niederspannungs(orts-)netzen angeschlossen sind.

Ortsnetze selbst werden dabei als passive Lasten modelliert, mit sogenannten Standard-Lastprofilen, oder gegebenenfalls mit worst-case Erzeugerprofilen. Es ist zu erwarten, dass diese passiven Modelle zukünftig genauer werden, da anstelle von standardisierten Lastprofilen kumulierte Profile basierend auf Smart Meter Daten verfügbar sein werden. Bereits jetzt werden vereinzelt Messwerte von Smart Metern in die Lastprofile eingebunden.

Die Last- bzw. Erzeugermodelle für DSSE Anwendungen werden statisch parametriert und meist über einige ausgewählte Messpunkte skaliert.

Statische, entkoppelte Modelle werden in Zukunft nicht mehr verwendet werden können, weil die unteren Netzebenen immer mehr mit sogenannten Prosumern durchdrungen werden, die Erzeugungsanlagen und Speichersysteme betreiben, und weil Photovoltaik-Wechselrichter selbst über eine Regelungsstatik oder eine sogenannte Q(U)-Regelung verfügen. Eine Q(U)-Regelung bezeichnet die Regelung der Blindleistung Q in Abhängigkeit von der Netzspannung U. Damit wird erreicht, dass der Wechselrichter abhängig von der Höhe der Netzspannung induktive oder kapazitive Blindleistung einspeist und so einer lokalen Spannungsanhebung oder Spannungsabsenkung entgegenwirkt. Damit erhöht sich die Aufnahmefähigkeit der Netze für zusätzliche Erzeugungsanlagen und es wird erreicht, dass Netzverstärkungen nicht oder erst später notwendig werden. Die Wirkleistungseinspeisung wird durch die Q(U)-Regelung nicht beeinflusst.

Damit wird die Korrelation von Last und Erzeugung in Zukunft zunehmen bzw. werden neue Korrelationen dazukommen, wie die Korrelation mit dem Strommarkt oder dem Mobilitätsverhalten.

Entsprechende Modelle offenbaren zum Beispiel die Dokumente US2018/018743 A1 und EP2942855 A1.

Darstellung der Erfindung

Ein Ziel der vorliegenden Erfindung ist es daher, ein Verfahren zur Beschreibung des Verhaltens von Netzknoten in einem Nieder- oder Mittelspannungsnetz anzugeben, das eine zeitliche Änderung des Verhaltens von Netzknoten berücksichtigt.

Diese Aufgabe wird durch ein Verfahren mit den Merkmalen des Patentanspruchs 1 gelöst, bei welchem es sich um ein Verfahren zur Erstellung von dynamischen Modellen von Netzknoten in einem Nieder- und/oder Mittelspannungs-Verteilnetz handelt, geeignet zur Verwendung in einem Netzbetriebsführungssystem für die elektrische Stromverteilung, wobei mit zumindest einer dezentralen Einheit zur Messwertaufnahme und -speicherung Zeitreihen von strombezogenen Messwerten, welche zumindest einen bestimmten Netzknoten betreffen, erfasst und abgespeichert werden. Dabei ist vorgesehen, dass von der Einheit zur Messwertaufnahme und -speicherung auf Basis dieser Zeitreihen mittels eines selbstlernenden Algorithmus ein dynamisches Modell für das Leistungsprofil und/oder das Blindleistungsprofil des oder der betreffenden Netzknoten erstellt wird.

Die dezentrale Einheit zur Messwertaufnahme und -speicherung wird auch als iSSN, intelligent Secondary Substation Node, bezeichnet, also als intelligenter Netzknoten einer sekundären Transformatorstation (in ländlichen Netzen auch als Ortsnetzstation bezeichnet). Der Begriff dezentral bezieht sich auf die Funktionalität, diese Einheit kann tatsächlich als eine physische Rechnereinheit in einer Ortsnetzstation vorgesehen sein. Die Einheit kann aber auch einfach als Software-Modul im SCADA-Umfeld (Teil des Netzbetriebsführungssystems) instanziiert werden (SCADA = Supervisory Control and Data Acquisition, das Überwachen und Steuern technischer Prozesse mittels eines Computer-Systems in der Netzleitzentrale des elektrischen Energienetzes). Die Einheit legt synchron oder asynchron eintreffende Messdaten als unbeschränkte Zeitreihen speicher- und zugriffsoptimal ab. Angeschlossene Komponenten sind dann in der Lage, spezifische oder allgemeine Anfragen ähnlich wie bei einer herkömmlichen Datenbank an die Einheit abzusetzen, erweitert um die Dimension der Zeit. Eine der Messwertaufnahme und - speicherung nachgelagerte Anwendung der Einheit stellt jeweils über eine entsprechende anwendungsspezifische Algorithmik die dynamischen Modelle zur Verfügung.

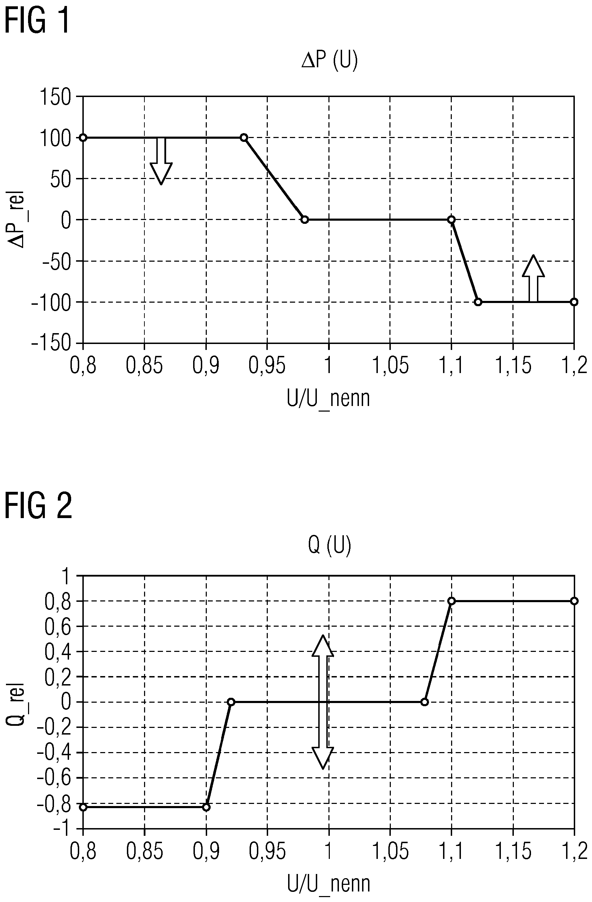

Durch die zunehmende Installation von Photovoltaik-Wechselrichtern mit Q(U) bzw. auch P(U) Statiken, siehe Beispiele hierzu in Fig. 1 und 2, kommt es zu einer Korrelation von Einstrahlung, Belastung und Spannung, die nicht durch einfache statische Lastmodelle abgebildet werden kann. Um Anwendungen wie DSSE und gegebenenfalls nachfolgend VVC weiterhin verwenden zu können, werden für diese ansonsten passiven Netzknoten entsprechende dynamische Modelle für das P-Profil (Leistungsprofil) und/oder das Q-Profil (Blindleistungsprofil) erstellt. Das Leistungsprofil beschreibt die elektrische Leistung an einem Netzknoten in Abhängigkeit von der dort vorhandenen elektrischen Spannung. Das Blindleistungsprofil beschreibt die elektrische Blindleistung an einem Netzknoten in Abhängigkeit von der dort vorhandenen elektrischen Spannung.

Dem selbstlernenden Algorithmus werden vorzugsweise historische Daten zur Verfügung gestellt, aus denen das Verhalten des oder Netzkonten als Reaktion auf z.B. Spannungssprüngen hervorgeht. Insofern ist in einer Ausführungsvariante der Erfindung vorgesehen, dass die Zeitreihen Messwerte enthalten, die Spannungssprünge umfassen.

Sind diese historischen Daten nicht aussagekräftig, enthalten sie etwa keine Messwerte von Spannungssprüngen, so ist es auch denkbar, dass Spannungssprünge gezielt erzeugt werden, um entsprechende Messwerte zu erhalten. Die Spannungssprünge könnten mit einem Regelumformer in einem Umspannwerk, mit einer gezielten Stufung, durchgeführt werden. Wenn ein regelbarer Ortsnetztransformator vorhanden ist, kann auch dieser für die Erzeugung der Spannungssprünge verwendet werden.

Insofern besteht eine Ausführungsvariante der Erfindung darin, dass Spannungssprünge erzeugt und die Messwerte zumindest während des Spannungssprungs mit der Einheit zur Messwertaufnahme und -speicherung erfasst und abgespeichert werden. Sinnvoller Weise werden auch die Messwerte vor und nach dem Spannungssprung erfasst und abgespeichert.

Es kann vorgesehen sein, dass die Erstellung des dynamischen Modells, insbesondere automatisiert, in regelmäßigen Abständen wiederholt wird. Dadurch können die dynamischen Modelle, also eben die Last- und Erzeugermodelle, entsprechend nachjustiert werden. Die Wiederholung kann automatisiert, das heißt z.B. in fixen vorgegebenen Zeitintervallen erfolgen, sie kann aber auch im Bedarfsfall händisch, z.B. über die Netzleitungszentrale, angestoßen werden.

Es kann vorgesehen sein, dass zur Erstellung des dynamischen Modells für einen bestimmten, insbesondere kritischen, Netzknoten der Einfluss mehrerer Netzknoten, von denen jeweils entsprechende Zeitreihen vorhanden sind, auf den bestimmten, insbesondere kritischen, Netzknoten bestimmt wird. Das erfindungsgemäße dynamische Modell wird also für einen bestimmten Netzknoten erstellt, wobei die Zeitreihen von Messwerten von anderen Netzknoten herangezogen werden, und die Zeitreihen von einem oder mehreren Messwerten des bestimmten Netzknotens selbst.

Kritisch in diesem Zusammenhang bedeutet, dass der Netzknoten eine besondere oder wichtige Aufgabe im Verteilnetz hat, und es daher besonders wichtig ist, über diesen Knoten gut Bescheid zu wissen, damit ein Ausfall vermieden werden kann. Ein solcher kritischer Netzknoten ist z.B. der Übergabepunkt von Mittelspannung auf Niederspannung.

Dabei kann vorgesehen sein, dass der Einfluss mehrerer Netzknoten auf den bestimmten, insbesondere kritischen, Netzknoten durch ein lineares Modell bestimmt wird, indem für jeden der mehreren Netzknoten ein konstanter Einflussfaktor bestimmt wird. Aus diesen Einflussfaktoren kann eine Sensitivitätsmatrix für den Einfluss von diesen bestimmten, insbesondere kritischen, Netzknoten auf alle anderen Netzknoten erstellt werden.

Es wird dabei also der Einfluss verschiedener Netzknoten, denen dezentrale Erzeuger, DER, also Erzeugungsanlagen bzw. Prosumer (wie PV-Systeme, intelligente Gebäude, etc.), unterlagert sind, ermittelt, und zwar insbesondere deren Einfluss auf bestimmte kritische Netzknoten, wie etwa einen Übergabepunkt von Mittelspannung auf Niederspannung. Dieser Einfluss der DER auf die bestimmten, insbesondere kritischen, Netzknoten kann mittels sogenannter Sensitivitätsmatrizen dargestellt werden. Üblicher Weise werden diese Sensitivitätsmatrizen mit Hilfe von Monte-Carlo Lastfluss-Simulationen ermittelt. Gemäß der Ausführungsvariante der Erfindung wird aber vorgeschlagen, die Sensitivität der DER auf bestimmte, insbesondere kritische, Netzknoten anhand der eingegangenen Messwerte aus dem Verteilnetz zu ermitteln und so eine Monte-Carlo Simulation zu ersetzen.

Unter der Voraussetzung, dass sowohl an den mehreren Knoten (z.B. DER-Abgängen) als auch an dem bestimmten, insbesondere kritischen, Netzknoten Messungen von Spannung und Strom erfolgt, welche in einer Einheit zur Messwertaufnahme und - speicherung (iSSN) aggregiert werden, können für unterschiedliche Betriebssituationen an den bestimmten, insbesondere kritischen, Knoten die Einflussfaktoren der im Verteilnetz befindlichen DER errechnet werden, sofern eine genügend große Menge an historischen Daten gegeben ist. Die Bestimmung des Einflusses kann über eine Linearisierung abgeschätzt werden. Die Linearisierung kann hierzu für mehrere Zeitpunkte t1, t2, ..., tn jeweils einen Messwert M_KK des bestimmten, insbesondere kritischen, Netzknotens und zugehörige Messwerte M_DER der anderen Netzknoten, z.B. DER-Netzknoten, heranziehen, um daraus einen konstanten Einflussfaktor pro einem der mehreren Netzknoten zu errechnen. Bei 1 bis X mehreren Netzknoten, z.B. DER-Netzknoten, ergibt sich folgendes Gleichungssystem, aus dem die Einflussfaktoren EF für die 1 bis X Netzknoten bestimmt werden können:

Zeitpunkt t1:

```
M_KK(t1) =
M_DER_1(t1)*EF_1 + M_DER_2(t1)*EF_2 + … + M_DER_X(t1)*EF_X
```

Zeitpunkt t2:

```
M_KK(t2) =
M_DER_1(t2)*EF_1 + M_DER_2(t2)*EF_2 + … + M_DER_X(t2)*EF_X
```

und so fort bis Zeitpunkt tn:

```
M_KK(tn) =
M_DER_1(tn)*EF_1 + M_DER_2(tn)*EF_2 + … + M_DER_X(tn)*EF_X
```

Der Einflussfaktor EF stellt somit die Sensitivität der mehreren Netzknoten 1 bis X, und damit einhergehend der hinterlagerten DER, hinsichtlich des bestimmten, insbesondere kritischen, Netzknotens dar.

Statt linearer Modelle zur Bestimmung der Einflussfaktoren kann vorgesehen sein, dass der Einfluss mehrerer Netzknoten auf den bestimmten, insbesondere kritischen, Netzknoten durch maschinelles Lernen bestimmt wird.

Unter maschinelles Lernen, engl. Machine Learning, fallen unterschiedliche Methoden, wie künstliche neuronale Netze, engl. neural networks, insbesondere können hier sogenannte Convolutional Neural Networks verwendet werden. Mit den Methoden des maschinellen Lernens können Modelle erzeugt werden, welche die Einflussfaktoren der DER bestmöglich abbilden.

Eine Ausführungsvariante der Erfindung besteht darin, dass das erstellte dynamische Modell zur Beschreibung des Spannungsverhaltens oder des Leistungsverhaltens von Netzknoten in einem Nieder- oder Mittelspannungsnetz verwendet wird. Es kann also beispielsweise in einem Netzbetriebsführungsystem für die elektrische Stromverteilung verwendet werden.

Das erfindungsgemäße Verfahren wird als Computerprogramm implementiert, sodass die Erfindung auch ein Computerprogrammprodukt betrifft, welches ein Programm umfasst und direkt in einen Speicher einer Einheit zur Messwertaufnahme und -speicherung eines Nieder- oder Mittelspannungsnetzes ladbar ist, mit Programm-Mitteln, um alle Schritte des erfindungsgemäßen Verfahrens auszuführen, wenn das Programm von der Einheit zur Messwertaufnahme und - speicherung ausgeführt wird.

Das Computerprogrammprodukt kann beispielsweise ein Datenträger sein, auf welchem ein entsprechendes Computerprogramm gespeichert ist, oder es kann ein Signal oder Datenstrom sein, der über eine Datenverbindung in den Prozessor einer dezentralen Einheit zur Messwertaufnahme und -speicherung (iSSN), oder in einen Prozessor in der Netzleitstelle für die elektrische Stromverteilung geladen werden kann.

Die erfindungsgemäße dezentrale Einheit zur Messwertaufnahme und -speicherung (iSSN) ist eine Anwendung, die einen selbstlernenden Algorithmus umfasst, der über eine definierte Schnittstelle diversen Anwendungen des DMS entsprechende dynamische Modelle zur Verfügung stellt. Für die Anwendung DSSE kann die iSSN in bzw. für ausgewählte Stationen eingesetzt werden, entsprechende Modelle können dann für mehrere, insbesondere alle, Netzknoten übernommen werden. Für die Anwendung VVC kann über Sprungantworten gezielt herausgefunden werden, in welcher Lastsituation eine Spannungsänderung eine Flexibilität hinsichtlich Leistung P oder Blindleistung Q ermöglichen würde. Damit steht ein zusätzlicher Aktor für VVC zur Verfügung.

Mit der gegenständlichen Erfindung kann ein dynamisches und korreliertes, nämlich von mehreren Netzknoten abhängiges, Verhalten modelliert werden. Es kann das Verhalten des Leistungsprofils P(U) und Blindleistungsprofils Q(U) anhand von Messdaten ermittelt werden. Es müssen keine Abschätzungen getroffen werden, die auf aufwändigen Simulationen und den damit oft verbundenen Unsicherheiten in der Modellierung verbunden sind. Entsprechend entfällt auch die - der Modellbildung - vorgelagerte Arbeit zur Modellierung einzelner Umrichtertypen mit unterschiedlichen Parametern und Netzverknüpfungspunkten hinsichtlich ihrer jeweiligen Auswirkung. Ohne erfindungsgemäßes Verfahren und damit ohne dynamische Modelle könnte folgender beispielhafter Verlauf auftreten:

a) Ein DSSE Lauf wird durchgeführt.

b) Es wird eine Verletzung des Spannungsbands erkannt.

c) Die VVC Anwendung mit statischen Profilen wird angestoßen.

d) Die von der VVC Anwendung vorgeschlagene Lösung lautet, Blindleistung Q von einem Kraftwerk anzufordern.

e) Durch die Blindleistung Q wird nun real die Spannung reduziert.

f) Die VVC Anwendung kann aufgrund der statischen Profile der vielen einzelnen Netzknoten nicht voraussagen, wie sicher der Blindleistungs-Haushalt ändert und welche Rückwirkungen dies auf die Spannung hat. Durch die sinkende Spannung aufgrund der zugeführten Blindleistung reduziert sich in der Folge durch die Q(U) Statiken der Umrichter auch die Bereitstellung von Blindleistung der Netzknoten. Diese Netzknoten besitzen ja eigentlich dynamische Profile.

g) Die DSSE Anwendung läuft wieder und erkennt erneut eine Verletzung des Spannungsbands.

h) Die VVC Anwendung läuft in nächsten Zeitschritt und es muss noch mehr Blindleistung Q angefordert werden.

Gemäß Schritt h) muss also zusätzlich Blindleistung Q von Kraftwerken angefordert werden, obwohl diese Blindleistung zumindest zum Teil ohnehin durch die dynamischen Netzkonten zur Verfügung gestanden wäre. Die verfügbaren Flexibilitäten werden also nicht ausreichend genutzt.

Ein ähnlicher beispielhafter Verbrauch könnte nach dem Stand der Technik auch auftreten, wenn die von der VVC vorgeschlagene Lösung eine Stufung der Spannung ist, z.B. durch den geregelten Ortsnetztransformator. Wenn zufällig die Höhe der Stufung eine ähnliche Größe hat wie die dadurch ausgelöste Spannungsänderung durch die Bereitstellung von Blindleistung, dann kann wiederum eine Art "Hunting" im System entstehen und es wird ein ständiges Stufen um plus/minus eine Stufe auftreten.

Insbesondere kann mit dem erfindungsgemäßen Verfahren für sogenannte kritische Netzknoten deren Einfluss auf Extremfälle im Verteilnetz untersucht werden, die nur selten auftreten, indem durch das übergeordnete Netz bestimmte Betriebssituationen, z.B. durch Änderung der Spannung, erzeugt werden und Messwerte in diesen Betriebssituationen erfasst werden. Daraus können die Einflussfaktoren der DER in solchen Situationen errechnet und das Portfolio von Sensitivitätsmatrizen bezüglich dieser Betriebssituationen erweitert werden.

Kurzbeschreibung der Figuren

Die Figuren zeigen bespielhafte Statiken gemäß dem Stand der Technik zur Regelung von Wechselrichtern:

Fig. 1     zeigt eine P(U) Statik eines PV (Photovoltaik) Wechselrichters,

Fig. 2     zeigt eine Q(U) Statik eines PV (Photovoltaik) Wechselrichters.

Auf der waagrechten Achse ist jeweils die relative Spannung aufgetragen, also das Verhältnis aus Ist-Spannung U zur Nennspannung U_nenn.

In Fig. 1 ist auf der senkrechten Achse die relative Leistung $\Delta P$ dargestellt, also das Verhältnis aus Ist-Leistung zu NennLeistung. Die Pfeile geben an, dass bei Erreichen der Grenze des Spannungsbands die Leistung zu reduzieren ist.

In Fig. 2 ist auf der senkrechten Achse die Blindleistung Q dargestellt. Die Pfeile geben an, dass im Bereich um die Nennspannung die Blindleistung nötigenfalls über Null erhöht oder auf unter Null gesenkt werden kann, um damit einen generellen Blindleistungsfluss - was einem Abruf von Blindleistung entspricht - auszulösen.

Diese Statiken dienen als Vorgaben für die interne Regelung des Wechselrichters im Bezug auf die am Anschlusspunkt herrschende Spannung. Sie beschreiben also sein lokales Verhalten, aber nicht den realen Einfluss des Wechselrichters zu einem bestimmten Zeitpunkt auf das restliche Verteilnetz. Für diesen Zustand schafft das erfindungsgemäße Verfahren Abhilfe.

**Patentansprüche**

1.  Computerimplementiertes Verfahren zur Erstellung von dynamischen Modellen von Netzknoten in einem Nieder- und/oder Mittelspannungs-Verteilnetz, geeignet zur Verwendung in einem Netzbetriebsführungssystem für die elektrische Stromverteilung, wobei mit zumindest einer dezentralen Einheit zur Messwertaufnahme und - speicherung Zeitreihen von strombezogenen Messwerten, welche zumindest einen bestimmten Netzknoten, welcher vorzugsweise als Übergabepunkt von Mittelspannung auf Niederspannung agiert, betreffen, erfasst und abgespeichert werden, wobei von der Einheit zur Messwertaufnahme und -speicherung auf Basis dieser Zeitreihen mittels eines selbstlernenden Algorithmus ein dynamisches Modell für das Leistungsprofil und/oder das Blindleistungsprofil des oder der betreffenden Netzknoten erstellt wird, und dass zur Erstellung des dynamischen Modells für einen bestimmten Netzknoten, welcher eine besondere oder wichtige Aufgabe im Nieder- und/oder Mittelspannungsverteilnetz hat, ein Einfluss mehrerer Netzknoten, von denen jeweils entsprechende Zeitreihen vorhanden sind, auf den bestimmten Netzknoten bestimmt wird, **dadurch gekennzeichnet, dass** die Zeitreihen Messwerte enthalten, die Spannungssprünge umfassen.

2. Verfahren nach Anspruch 1, **dadurch gekennzeichnet, dass** Spannungssprünge erzeugt und die Messwerte zumindest während des Spannungssprungs mit der Einheit zur Messwertaufnahme und -speicherung erfasst und abgespeichert werden.

3. Verfahren nach einem der Ansprüche 1-2, **dadurch gekennzeichnet, dass** die Erstellung des dynamischen Modells, insbesondere automatisiert, in regelmäßigen Abständen wiederholt wird.

4. Verfahren nach einem der Ansprüche 1 bis 3, **dadurch gekennzeichnet, dass** der Einfluss mehrerer Netzknoten auf den bestimmten Netzknoten, welcher eine besondere oder wichtige Aufgabe im Nieder- und/oder Mittelspannungsverteilnetz hat, durch ein lineares Modell bestimmt wird, indem für jeden der mehreren Netzknoten ein konstanter Einflussfaktor bestimmt wird.

5. Verfahren einem der Ansprüche 1 bis 4, **dadurch gekennzeichnet, dass** der Einfluss mehrerer Netzknoten auf den bestimmten Netzknoten, welcher eine besondere oder wichtige Aufgabe im Nieder- und/oder Mittelspannungsverteilnetz hat, durch maschinelles Lernen bestimmt wird.

6. Verfahren nach einem der Ansprüche 1-5, **dadurch gekennzeichnet, dass** das erstellte dynamische Modell zur Beschreibung des Spannungsverhaltens oder des Leistungsverhaltens von Netzknoten in einem Nieder- oder Mittelspannungsnetz verwendet wird.

7. Computerprogrammprodukt, welches ein Programm umfasst und direkt in einen Speicher einer Einheit zur Messwertaufnahme und -speicherung eines Nieder- oder Mittelspannungsnetzes ladbar ist, mit Programm-Mitteln, wobei die Programm-Mittel ausgestaltet sind alle Schritte des Verfahrens nach einem der Ansprüche 1 bis 6 auszuführen, wenn das Programm von der Einheit zur Messwertaufnahme und -speicherung ausgeführt wird.

**Claims**

1. Computer-implemented method for creating dynamic models of network nodes in a low and/or medium voltage distribution network, suitable for use in a network operating management system for electrical power distribution, wherein with at least one distributed unit for recording and storing measurement values, time series of power-related measurement values which relate to at least one specified network node, which preferably acts as a transfer point from medium voltage to low voltage, are captured and stored, wherein a dynamic model for the power profile and/or the reactive power profile of the related network node/s is created by the unit for measurement value recording and storage on the basis of these time series by means of a self-learning algorithm, and that an influence of a plurality of network nodes on the specified network nodes, from which corresponding time series are respectively present, is specified for creating the dynamic model for a specified network node, which has a special or important task in the low and/or medium voltage distribution network, **characterised in that** the time series contain measurement values which include voltage jumps.

2. Method according to claim 1, **characterised in that** voltage jumps are generated and the measurement values are captured and stored at least during the voltage jump with the unit for measurement value recording and storage.

3. Method according to one of claims 1-2, **characterised in that** the creation of the dynamic model is repeated at regular intervals, in particular in an automated manner.

4. Method according to one of claims 1 to 3, **characterised in that** the influence of a plurality of network nodes on the specified network nodes, which has a special or important task in the low and/or medium voltage distribution network, is specified by a linear model, in which a constant influencing factor is specified for each of the plurality of network nodes.

**5.** Method according to one of claims 1 to 4, **characterised in that** the influence of a plurality of network nodes on the specified network nodes, which has a special or important task in the low and/or medium voltage distribution network, is specified by machine learning.

**6.** Method according to one of claims 1 - 5, **characterised in that** the dynamic model created is used for describing the voltage behaviour or the power behaviour of network nodes in a low or medium voltage network.

**7.** Computer program product, which comprises a program and can be loaded directly into a memory of a unit for measurement value recording and storage of a low or medium voltage network, with program means, wherein the program means are designed to carry out all steps of the method according to one of claims 1 to 6, if the program is executed by the unit for measurement value recording and storage.

**Revendications**

**1.** Procédé mis en œuvre par ordinateur pour la création de modèles dynamiques de noeuds de réseau dans un réseau de distribution à faible et/ou moyenne tension, approprié pour une utilisation dans un système de gestion de réseau pour la distribution de courant électrique, dans lequel avec au moins une unité décentralisée pour la réception et l'enregistrement de valeurs de mesure, des séries chronologiques de valeurs de mesure liées au courant sont détectées et enregistrées, lesquelles concernent au moins un certain noeud de réseau, lequel agit de préférence comme point de transfert de la moyenne tension à la faible tension, dans lequel est créé un modèle dynamique pour le profil de puissance et/ou le profil de puissance réactive du ou des nœud(s) de réseau concerné(s) par l'unité pour la réception et l'enregistrement de valeurs de mesure sur la base de ces séries chronologiques au moyen d'un algorithme d'apprentissage automatique, et en ce que pour la création du modèle dynamique pour un certain noeud de réseau, lequel a une tâche particulière ou importante dans le réseau de distribution à faible et/ou moyenne tension, une influence de plusieurs noeuds de réseau, par lesquels à chaque fois des séries chronologiques correspondantes sont présentes, est déterminée sur les noeuds de réseau spécifiques, **caractérisé en ce que** les séries chronologiques comprennent des valeurs de mesure qui englobent des sauts de tension.

**2.** Procédé selon la revendication 1, **caractérisé en ce que** des sauts de tension sont produits et les valeurs de mesure sont détectées et enregistrées au moins pendant le saut de tension avec l'unité pour la réception et l'enregistrement de valeurs de mesure.

**3.** Procédé selon l'une des revendications 1 à 2, **caractérisé en ce que** la création du modèle dynamique, est répété, plus particulièrement automatisé, à intervalles réguliers.

**4.** Procédé selon l'une des revendications 1 à 3, **caractérisé en ce que** l'influence de plusieurs noeuds de réseau sur le noeud de réseau spécifique, lequel a une tâche particulière ou importante dans le réseau de distribution à faible et/ou moyenne tension, est déterminée par un modèle linéaire, tandis que pour chacun des plusieurs noeuds de réseau est déterminé un facteur d'influence constant.

**5.** Procédé selon l'une des revendications 1 à 4, **caractérisé en ce que** l'influence de plusieurs noeuds de réseau sur le noeud de réseau spécifique, lequel a une tâche particulière ou importante dans le réseau de distribution à faible et/ou moyenne tension, est déterminée par l'apprentissage automatique.

**6.** Procédé selon l'une des revendications 1 à 5, **caractérisé en ce que** le premier modèle dynamique créé pour la description du comportement en tension ou du comportement en puissance de noeuds de réseau est utilisé dans un réseau de distribution à faible ou moyenne tension.

**7.** Produit de programme informatique qui comprend un programme et peut être chargé directement dans une mémoire d'une unité pour la réception et l'enregistrement de valeurs de mesure d'un réseau de distribution à faible ou moyenne tension, avec des moyens de programme, dans lequel les moyens de programme sont configurés pour exécuter toutes les étapes du procédé selon l'une des revendications 1 à 6, lorsque le programme est exécuté par l'unité pour la réception et l'enregistrement de valeurs de mesure.

FIG 1

ΔP (U)

FIG 2

Q (U)

**EP 3 667 851 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2018018743 A1
- EP 2942855 A1